# EUROPEAN PATENT SPECIFICATION

(11) **EP 1 250 288 B1**
(45) Date of publication and mention of the grant of the patent: **03.10.2007**
(21) Application number: 01942611.3
(22) Date of filing: 18.01.2001
(51) Int. Cl.: C01G 37/02, C02F 1/70, C02F 1/52

(54) **A METHOD FOR TREATMENT OF HEXAVALENT CHROMIUM COMPOUNDS IN WASTE WATER ORIGINATING FROM PROCESSING OF METALS**
VERFAHREN ZUR BEHANDLUNG VON HEXAVALENTEN CHROMVERBINDUNGEN IN ABWÄSSERN DER METALLVERARBEITUNG
PROCEDE DE TRAITEMENT DE COMPOSES DE CHROME HEXAVALENT DANS DES EAUX USEES PROVENANT DE TRAITEMENTS DE METAUX

(30) Priority: 19.01.2000 FI 20000103
(43) Date of publication of application: 23.10.2002
(73) Proprietor: Syynimaa, Ari Pekka, 04500 Kellokoski (FI); Laukkanen, Pekka, 04500 Kellokoski (FI); Soranta, Petteri, 04500 Kellokoski (FI)
(72) Inventor: Syynimaa, Ari Pekka, 04500 Kellokoski (FI); Laukkanen, Pekka, 04500 Kellokoski (FI); Soranta, Petteri, 04500 Kellokoski (FI)
(74) Representative: Jaala, Jukka Arvi
(86) International application number: PCT/FI2001/000039
(87) International publication number: WO 2001/053204

(56) References cited:
- FI-B- 45 748
- US-A- 4 108 596
- US-A- 5 415 848
- DATABASE CAPLUS [Online] DOC. NO. 109:242891 REZNITSKII L.A. ET AL.: 'Dehydration of chromium (III) hydroxide. The crystallization enthalpy of amorphous chromium oxide and its solid solutions in ferric oxide', XP002938837 Retrieved from STN, accession no. 1988:642891
- DATABASE WPI Week 7940, Derwent Publications Ltd., London, GB; AN 1979-72689B, XP002953049 & JP 54 108 460 A (MORI M) 25 August 1979

## Description

The invention relates to the method defined in claim 1 for treating hexavalent chromium compounds occurring in waste water originating from the processing of metals.

The plating of metals enhances the corrosion resistance and hardness of metals. Chromium plating by electrodeposition uses a plating solution with chromid anhydride (CrO₃) as the chromium source. As chromium trioxide is dissolved in water, dichromic acid H₂Cr₂O₇ and/or chromic acid CrH₂O₄ are obtained, which dissociate into Cr₂O₇²⁻ and CrO₄²⁻ ions depending on the pH. The common denomination "chromic acid" will be used below to denote dichromic acid and chromic acid. The solution used for chromium plating, i.e. the chromium plating bath, contains, besides chromic acid and (di)chromic acid, a catalyst consisting of acid anions or halogen compounds. The most frequent acid anion source is sulphuric acid

In electrodeposition of metals, the chromium plating solution containing chromic acid and dissociation products Cr₂O₇²⁻ and CrH₂O₄²⁻ results in rinse and storm waters containing chromic acid and its dissociation products. The chromium plating solution used requires periodical replacement due to impurities (mainly trivalent chromium compounds, iron and copper) accumulating in the solution. Metal processing at foundries and welding plants also results in effluents containing hexavalent chromium compounds. The hexavalent chromium compounds, such as chromic acid and its dissociation products, are most economically and conveniently precipitated in the form of chromium(III)hydroxide from effluents originating from the metal treatment processes mentioned above.

Conventional methods for treating effluents containing chromic acid have focused on the precipitation of chromic acid and its dissociation products present in the effluents in different chromium hydroxide forms and on the reconversion of hydroxides into a form that allows easy transportation. In fact, waste solutions containing chromic acid and its dissociation products are usually treated by regulating the pH of the solution with mineral acid (e.g. HNO₃, HCl, H₂SO₄) to a value under 2.5 and by adding a reducing agent such as sodium hydrogen sulphate or sodium hydrogen bisulphate to the solution. After this, a base such as NaOH is added to the solution in order to regulate the pH to 7-9, the chromic acid and its dissociation products precipitating as a sludge-like chromium hydroxide deposit Cr(OH)₃, which is removed from the solution by filtering. A typical process of this kind is described in JP patent specification 63,021,223, in which waste solutions containing dissociation products of chromic acid are treated so that Cr(III) and CR(II) hydroxide precipitate is obtained.

Chromium hydroxides (Cr(OH)ₓ, in which x is 1-6) are classified as hazardous waste in the EU waste list, and for this reason their destruction is problematic and often expensive, involving high waste treatment and transport costs. Concentrating chromium hydroxides into a form that is easier to transport does not eliminate the basic problem, i.e. the destruction of hydroxides classified as hazardous wastes. The deposition of chromium hydroxides at waste dumps results in an increased need for hazardous waste treatment plants and is not economically viable, since industries constantly need virgin chromium for various products and production processes in the metal industry.

The chief objective of the invention is to overcome the prior art inconveniences. Thus the chief objective of the invention is to convert hexavalent chromium compounds occurring in effluents originating from the processing of metals into a form where they are no longer classified as hazardous wastes, i.e. into chromium hydroxides.

Another objective of the invention is to convert hexavalent chromium compounds occurring in effluents originating from the processing of metals into a recyclable form that can be industrially utilised

A further objective of the invention is to provide a treatment of hexavalent chromium compounds occurring in effluents that is as simple and economical as possible.

The invention relates to the method of claim 1 for treating (utilising) hexavalent chromium compounds occurring in effluents from metal processing. Waste water contains 0.5-50 percent by weight, preferably 5-30 percent by weight of chromic acids and/or its dissociation products. In addition, waste water may contain metal impurities (e.g. Fe, As V, alkali metals), acid anions, flocculants and halogen compounds, among other things. The waste water may originate e.g. from plating processes in the metal industry, such as metal chromium plating, grinding dust produced by metal grinding, smelting plants, etc.

In the method of the invention, hexavalent chromium compounds are reduced in acid conditions, and subsequently the chromium hydroxide is precipitated by adding a base to the solution. The chromium hydroxide is heated in order to be converted into chromium oxide.

The heating is performed by initial dehumidification of the chromium hydroxide, resulting in hydrous chromium hydroxide. The hydrous chromium hydroxide thus obtained is heated to a temperature above 300°C, preferably 300-500°C, at which crystal water is removed and amorphous dichromium trioxide is obtained. When the heating is continued, the amorphous dichromium trioxide starts converting, at about 400-800°C, however usually at about 700°C, into crystalline dichromium trioxide. When dichromium trioxide is further heated, a brown crystalline form of dichromium trioxide is first obtained and then a green crystalline form. The crystalline dichromium trioxide is washed, dried and ground to the desired particle size.

Before the precipitation of hexavalent chromium compounds as chromium hydroxide in the method, heavy metals such as Fe and Cu are preferably removed from the waste water to avoid their presence in the end product

In the method of the invention, hexavalent chromium is precipitated as chromium hydroxide deposit in two steps:
In the first step, the pH of the waste water is regulated to a value under 3, preferably 2-2.5. The pH is preferably regulated with a mineral acid such as H₂SO₄, HNO₃ or HCl. Chromic acid and its dissociation products are reduced, using relatively mild reducing agents such as NaHSO4 or Na₂S₂O₅.
In the second step, the pH of the solution is regulated to 7-9, preferably 8.5-9.0 with NaOH, and then the sludge-like Cr(OH)₃ deposit precipitates. The precipitate thus produced usually contains a relatively large amount of water, and for this reason it is further concentrated by means of pressure filtering, for instance. In the method of the invention, the sludge-like precipitate is pressure-filtered to a solid matter content above 20 percent by weight. A high solid matter content has the advantage of shortening the subsequent heating period of chromium hydroxide and of reducing the need for heating energy.

After this, the hydrous chromium hydroxide precipitate produced is heated in order to produce various forms of chromium oxide. First the hydroxide precipitate is dehumidified at about 100-140°C. When the precipitate is further heated, crystal water is removed at a temperature of about 300-700°C, however usually at a temperature of 300-500°C, approximately according to the following reaction (1):

2 Cr(OH)₃x Y H₂O>Cr₂O₃+X H₂O (g) (1)

The water molecule coefficients Y and X appearing in the reaction (1) depend on the amount of crystal water per chromium hydroxide molecule. As crystal water is removed, amorphous dichromium trioxide is produced. As the amorphous dichromium trioxide is further heated, an exothermic reaction usually starts at about 700°C, in which amorphous dichromium trioxide is converted into crystalline dichromium trioxide according to the following reaction (2):

Cr₂O₃>α- Cr₂O₃ (2)

First, a brown crystal form of chromium oxide is produced in the reaction, and when the heating is continued to 800-1200°C after the end of the exothermic reaction, this forms turns into a green crystal form.

The transition temperatures of chromium hydroxide are not very exact due to the foreign metals such as Fe and Cu usually contained in chromium hydroxide. Thus the transition temperature of amorphous and crystalline dichromium trioxide may drop as low as about 400°C or rise to about 800°C due to impurities.

In the method described above, chromium hydroxide is converted into chromium oxide under a pressure of 1 atm. Should the operations nonetheless be performed under decreased or increased pressure, the transition temperatures of the various forms of chromium hydroxide and chromium oxide will naturally change as well.

In the method of the invention, the heating of chromium hydroxide is preferably performed in CO or hydrogen atmosphere, i.e. in a reducing environment. To provide e.g. a CO atmosphere, oxygen is displaced by burning hydrocarbon. During heating, the crystal structure evolution can be controlled by means of various carbon forms and carbon sources, such as active carbon, graphite, organic carbon sources, sawdust, paper, etc.

After this, the temperature of chromium oxide is further dropped to a temperature under 100°C, and then impurities are washed away from the chromium oxide, it is dried and ground to the desired average particle size 0.05-5 µm, preferably 0.25-1.3 µm.

In the method for preparing chromium oxide described above, dehumidification of the chromium oxide precipitate can be performed by other means known *per se,* such as heating. Other conceivable means of drying are deep-freeze drying, drying under reduced pressure, etc.

The colour of the Cr₂O₃ pigment prepared can be varied by varying the drying conditions and the particle size of the dichromium trioxide powder. The yellowiest chromium oxide pigments have a more finely divided particle size, whereas the dark hues have a larger particle size and a bluer colour. The chromium oxide resulting from the method is not classified as hazardous waste, but has proved a safe, nontoxic and non-reacting chemical. Dichromium trioxide Cr₂O₃ is a commonly used reactant in industries, and it has a notable economic impact The purposes of use of chromium oxide include colour pigments, raw materials of fireproof materials, catalysts, grinding agents and coating agents/coating powders.

The method of the invention clearly differs from conventional methods of preparing dichromium trioxides both with regard to the objectives of the invention, the reactant used and the production process.

Conventional methods have aimed to prepare dichromium trioxide using virgin chrome as the reactant Roasted with alkali carbonate chromes have yielded alkali chromate, from which alkalide chromate has been further produced. Alkalide chromate has subsequently been calcinated to form dichromium trioxide. As stated above, the objective of the method of the invention is instead to convert chromium hydroxides classified as hazardous waste into a recyclable, industrially usable form: Another objective is an optimally economical and simple utilisation of chromium(VI) compounds occurring in effluents from metal treatment

Compared to conventional methods, the method of the invention yields the following advantages: The method allows easy conversion of the chromium(VI) compounds occurring in effluents from metal (plating) treatment into industrially usable chromium(III)oxide compounds. The method overcomes the environmental nuisance caused by chromium hydroxides in converting chromium compounds into stable chromium trioxides. Thus chromium hydroxides originating from effluents from the metal industry no longer constitute hazardous waste material, but a recyclable raw material for industries.

The method allows an appreciable decrease in the load on special waste treatment plants, because the method of the invention enables chromium hydroxides obtained from effluents from the metal industry to be recovered for utilisation.

The method for preparing dichromium trioxide of the invention also involves lower production costs than conventional methods in the field, which produce chromium oxide from virgin chrome; the method of the invention comprises one single energy-requiring roasting step, whereas two roasting steps are needed when chromes are used.

The invention is described in greater detail below by means of the accompanying examples.

### Example 1

A solution for hard chromium plating of metals contained about 200-300 g/l of dissociation products of chromic acid Cr₂O₇²⁻ and CrH₂O₄²⁻. The Cu and Fe ions were removed by chemical means from the rinse water for chromium plating, which contained about 2 percent by weight of dissociation products of chromic acid Cr₂O₇²⁻ and CrH₂O₄²⁻. Then the pH of the rinse water was regulated to less than 2.5 with concentrated sulphuric acid. Na₂S₂O₅ was added to the solution in order to reduce the chromium (VI) compounds to chromium (III) compounds. Then the pH of the solution was regulated to a value in the range 8.5-9.0 with NaOH and a flocculant was added to the solution, so that the sludge-like Cr(OH)₃ precipitate settled on the bottom of the vessel. The sludge-like precipitate was sedimented and pressure-filtered. The solid precipitate produced contained over 20 percent by weight of solid matters, i.e. mainly chromium(III)hydroxide. Then the solid precipitate containing principally Cr(OH)₃ was heated in an oven, first at 100-140°C for dehumidification, yielding bluish-green hydrous Cr(OH)₃ powder (Cr(OH)₃xYH₂O. The powder was further heated to approx. 300-500°C in order to remove the crystal water, whereby amorphous chromium oxide was obtained. The amorphous chromium(III)oxide was converted into brown crystalline chromium oxide by heating at about 400-800°C, at which an exothermic reaction took place: Cr₂O₃ > α-Cr₂O₃. During the heating of chromium(III)hydroxide at about 200-300°C, a certain amount of chromium(VI) was also produced as a by-product. The chromium(VI) was thermally decomposed to Cr(III) and further to the desired crystalline Cr₂O₃ at about 700°C.

After this, the crystalline chromium oxide was allowed to cool to less than 100°C, and then it was freed from impurities (i.a. Cr(VI)) by washing. The wash water was recycled to the waste water treatment. After the washing, the product was dried at about 100-140°C, yielding pure crystalline Cr₂O₃ as an end product. The crystalline chromium(III)oxide was eventually ground to an average particle size of 1 µm.

### Example 2

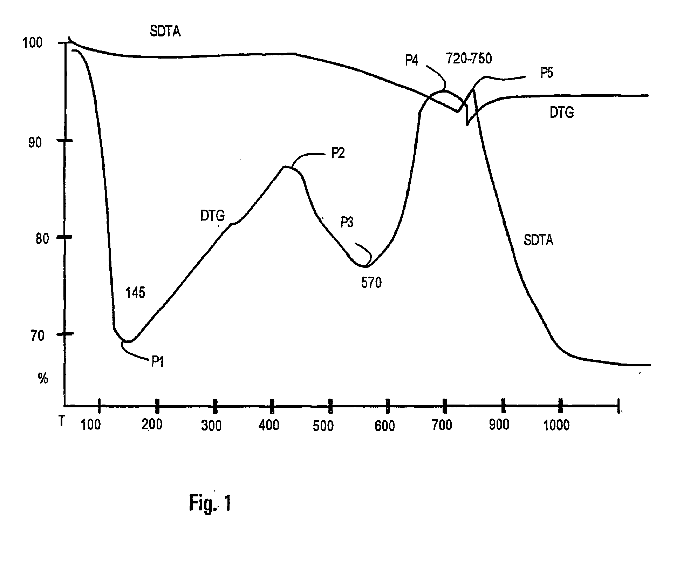

Figure 1 illustrates the reactions that take place in the chromium hydroxide precipitate during heating. Samples of chromium hydroxide precipitate were heated and their DTG and SDTA curves were determined during the heating. The measuring equipment used was a Mettler Toledo TA8000 TGA850 thermo-scale. Before the determination, the samples were dried at 50°C until their weight was stabilised. As the sample batch was brought to standard weight, its weight dropped by 40-50%, i.e. its solid matter content was 50-60% at the beginning of the measurement The measurement was performed in nitrogen atmosphere and the rate of temperature increase was 10°C/min.

The curves shown in figure 1 are averages of the DTG and SDTA curves of five chromium hydroxide samples.

Figure 1 shows the heating temperature/°C on the horizontal axis and the ratio of the percent by weight of the sample to the initial weight 50 /°C after the drying. SDTA = Scanning Differential Thermal Analysis and DTG = Differential Thermo Gravimetry. Of these two, SDTA describes the energy variation rate and DTG the weight variation rate.

A study of the DTG weight variation rate curve reveals an average turning point at which free water has left the sample at about 145°C (130-160°C) i.e. at the point P1. At the following turning point of the curve P2 (about 440-470°C) the water bound to the crystal lattice starts escaping and amorphous Cr₂O₃ to form as the weight variation range slows down. At the point P3 (about 550-585°C) the water bound to the crystal lattice has been removed and the main portion of the amorphous Cr₂O₃ has been formed as the weight variation rate starts increasing again. At the point P4 (about 700°C) the chromium hydroxide has turned into completely amorphous Cr₂O₃. At the point P5 (about 720-750°C) an exothermal reaction starts, in which the amorphous Cr₂O₃ turns into crystalline α-Cr₂O₃ as the weight variation rate approaches zero. The SDTA curve, in turn, shows a mild bend at the removal temperature of free water (130-160°C), however, the greatest change of the energy variation rate occurs when the amorphous Cr₂O₃ starts turning into α-Cr₂O₃. At a temperature of about 750-1000°C, the amorphous Cr₂O₃ in its totality has turned into brown crystalline α-Cr₂O₃, appearing as a bend of the SDTA curve almost towards the horizontal, i.e. the energy variation rate approaches zero. If the brown α-Cr₂O₃ is further heated, it turns into its green crystal form.

## Claims

1. A method for treating hexavalent chromium compounds occurring in effluents from the treatment of metals, in which hexavalent chromium compounds are reduced in acid conditions, and then the chromium hydroxide is precipitated by means of a base addition to the solution and chromium hydroxide is dehumidified,
**characterised in that**
- dehumified chromium hydroxide is heated to 300-800°C in order to remove the crystal water and to prepare amorphous dichromium trioxide and subsequently the amorphous dichromium trioxide is heated to a temperature above 400°C, preferably above 700°C, in order to prepare crystalline dichromium trioxide into crystalline chromium oxide, while the heating of chromium hydroxide is performed in a protective gas such as in nitrogen, hydrogen or CO atmosphere.

2. A method as defined in claim 1, **characterised in that** the chromium hydroxide is heated in a reducing environment such as in hydrogen or CO atmosphere.

3. A method as defined in any of claims 1-2, **characterised in that** the heating is performed in the presence of active carbon, graphite or any other carbon source.

4. A method as defined in any of claims 1 - 3, **characterised in that** the waste water contains 0.5 - 50 percent by weight of chromic acid and/or its dissociation products.

5. A method as defined in any of claims 1 - 4, **characterised in that** the waste water derives from the plating of metals, such as chromium plating of metals by electrodeposition.

6. A method as defined in any of claims 1 - 5, **characterised in that** the chromium compounds are reduced at pH 2-2.5 and the chromium hydroxide precipitate is sedimented with a base at pH 6-9, preferably pH 8-9, in the presence of any flocculants used.

7. A method as defined in claim 6, **characterised in that** the sludge-like precipitate is concentrated by pressure-filtering to a 20 percent by weight concentration of chromium (III) hydroxide.

## Patentansprüche

1. Verfahren zur Behandlung von hexavalenten Chromverbindungen, die in Abflüssen der Metallverarbeitung vorkommen, bei welchem hexavalente Chromverbindungen unter sauren Bedingungen reduziert werden und anschließend das Chromhydroxid durch Hinzufügen einer Base zu der Lösung ausgefällt und das Chromhydroxid entfeuchtet wird,
**dadurch gekennzeichnet, dass**
- entfeuchtetes Chromhydroxid auf 300-800 °C erhitzt wird, um das Kristallwasser zu entziehen und amorphes Dichromtrioxid zu erzeugen, und dass anschließend das amorphe Dichromtrioxid auf eine Temperatur von über 400 °C, vorzugsweise über 700 °C, erhitzt wird, um kristallines Dichromtrioxid zu erzeugen und dieses in kristallines Chromoxid umzuwandeln, wobei das Erhitzen des Chromhydroxids unter einem Schutzgas wie zum Beispiel einer Stickstoff-, Wasserstoff- oder CO-Atmosphäre erfolgt.

2. Verfahren nach Anspruch 1, **dadurch gekennzeichnet, dass** das Chromhydroxid in einem reduzierenden Milieu erhitzt wird, wie beispielsweise in Wasserstoff- oder CO-Atmosphäre.

3. Verfahren nach einem der Ansprüche 1-2, **dadurch gekennzeichnet, dass** das Erhitzen in Gegenwart von Aktivkohle, Graphit oder einer anderen Kohlenstoffquelle erfolgt.

4. Verfahren nach einem der Ansprüche 1-3, **dadurch gekennzeichnet, dass** die Abwässer 0,5-50 Gew.-% Chromsäure und/oder deren Dissoziationsprodukte enthalten.

5. Verfahren nach einem der Ansprüche 1-4, **dadurch gekennzeichnet, dass** die Abwässer aus der Beschichtung von Metallen, wie beispielsweise der Verchromung von Metallen mittels Galvanisierung, stammen.

6. Verfahren nach einem der Ansprüche 1-5, **dadurch gekennzeichnet, dass** die Chromverbindungen bei einem pH-Wert von 2-2,5 reduziert werden und das Chromhydroxidpräzipitat mit einer Base bei einem pH-Wert von 6-9, vorzugsweise einem pH-Wert von 8-9, in Gegenwart etwaiger verwendeter Flockungsmittel, ausgefällt wird.

7. Verfahren nach Anspruch 6, **dadurch gekennzeichnet, dass** das schlammartige Präzipitat durch Druckfiltration auf einen Gehalt von 20 Gew.-% Chrom (III) hydroxid konzentriert wird. "

## Revendications

1. Procédé de traitement de composés de chrome hexavalent apparaissant dans des effluents provenant du traitement de métaux, dans lequel des composés de chrome hexavalent sont réduits dans des conditions acides, puis l'hydroxyde de chrome est précipité en ajoutant une base à la solution, et l'hydroxyde de chrome est déshumidifié,
**caractérisé en ce que**
- l'hydroxyde de chrome déshumidifié est chauffé à 300-800°C afin de retirer l'eau cristalline et de préparer le trioxyde de dichrome amorphe, puis le trioxyde de dichrome amorphe est chauffé à une température supérieure à 400 °C, de préférence supérieure à 700°C, afin de préparer le trioxyde de dichrome cristallin en oxyde de chrome cristallin, tandis que le chauffage de l'hydroxyde de chrome est réalisé dans un gaz protecteur tel que l'azote, l'hydrogène ou une atmosphère de CO.

2. Procédé selon la revendication 1, **caractérisé en ce que** l'hydroxyde de chrome est chauffé dans un environnement de réducteur, notamment de l'hydrogène ou une atmosphère de CO.

3. Procédé selon l'une quelconque des revendications 1 à 2, **caractérisé en ce que** le chauffage est réalisé en présence de charbon actif, de graphite ou de toute autre source de carbone.

4. Procédé selon l'une quelconque des revendications 1 à 3, **caractérisé en ce que** le condensat contient 0,5 à 50 pour cent en poids d'acide chromique et/ou ses produits de dissociation.

5. Procédé selon l'une quelconque des revendications 1 à 4, **caractérisé en ce que** le condensat provient du placage des métaux, tel que le chromage des métaux par dépôt électrolytique.

6. Procédé selon l'une quelconque des revendications 1 à 5, **caractérisé en ce que** les composés de chrome sont réduits à un pH de 2 à 2,5, et le précipité d'hydroxyde de chrome est sédimenté avec une base à un pH de 6-9, de préférence un pH de 8-9, en présence de tous floculants utilisés.

7. Procédé selon la revendication 6, **caractérisé en ce que** le précipité de type boue est concentré par filtration sous pression à une concentration de 20 pour cent en poids d'hydroxyde de chrome (III).
